# EUROPEAN PATENT SPECIFICATION

(11) **EP 0 718 371 B1**
(45) Date of publication and mention of the grant of the patent: **03.03.2004**
(21) Application number: 95309220.2
(22) Date of filing: 19.12.1995
(51) Int. Cl.: C08L 83/04

(54) **Silicone elastomer-forming composition**
Silikon elastomer-bildende Zusammensetzung
Composition de silicone formant un élastomère

(30) Priority: 23.12.1994 GB 9426082
(43) Date of publication of application: 26.06.1996
(73) Proprietor: Dow Corning GmbH, 65201 Wiesbaden (DE)
(72) Inventor: Bentz, Peter O., D-65232 Taunusstein (DE); Mitter, Monica, D-55268 Nieder-Olm (DE)
(74) Representative: Vandamme, Luc Johan Roger

(56) References cited:
- EP-A- 0 355 459
- EP-A- 0 534 472
- EP-A- 0 596 534
- US-A- 5 321 058
- US-A- 5 364 921
- DATABASE WPI Derwent Publications Ltd., London, GB; AN 75-69548w & JP-A-51 028 309 (SHIN-ETSU) , 19 August 1976

## Description

This invention is concerned with silicone elastomer-forming compositions. More particularly it is concerned with compositions which provide improved unprimed adhesion to substrates, especially metal or plastic substrates.

Elastomer-forming silicone compositions have been known for some time. A particularly useful type of silicone elastomer-forming compositions is the type where the elastomer is formed via an addition reaction. This type of composition has the advantage that upon curing no by-products are formed, and hence the resulting elastomer product has substantially the same dimension as the uncured elastomer. This is not the case for example with products which cure by condensation reaction where the evolution of a by-product, e.g. alcohol, will cause the product to shrink to some extent upon curing. Many of these addition reaction elastomer-forming compositions require priming of the surface in order to ensure good adhesion thereto. This is particularly true where the surface is metal or a plastic.

Attempts have been made to produce addition reaction elastomer-forming compositions which have improved good adhesion to several substrates. For example German patent specification DE 29 00 162 describes a composition which is useful as an electrical insulating coating and comprises a dimethylvinyl end-blocked polydimethylsiloxane, a methylhydrosiloxane as cross-linker, a platinum complex as catalyst and an organosilicon compound having a methacrylic acid group substituent which act as a coupling agent.

European patent specification E.P. 355 459 describes organopolysiloxane compositions which cure to elastomers as adhesives. They contain (a) an organopolysiloxane with Sibound vinyl groups, (b) an organopolysiloxane with SiH groups,(c) a Pt catalyst, (d) an inhibitor and (e) an organic peroxide, excluding acyl peroxides and they exhibit improved adhesion to a variety of substrates.

Japanese application JP 51/28309, according to the WPI abstract, describes a curable rubber coating composition with improved adhesion to substrates which comprises 100 parts of CH₂=CHSi (R¹₂) O [Si (R²₂]ₘSi (R¹₂) CH=CH₂ having a viscosity of 10,000mPa.s wherein R¹ and R² are methyl groups, 10 parts of a silicone containing 10 mole% trimethylsiloxane groups, 50 mole% dimethylsiloxane groups and 40 mole% methylhydrosiloxane units, 3 parts of titanium dioxide, 4 parts of CH₂=CHC(O)O(CH₂)₃Si(OCH₃)₃, 1 part of 2,4-dichlorobenzoyl peroxide and chloroplatinic acid. The resulting elastic coating is said to have better adhesion to substrates than coatings which do not contain these ingredients.

EP-A 639622 discloses a curable silicone composition comprising alkenyl siloxane, hydrogen siloxane, platinum catalyst, an organotitanium compound and, as an option, acryloxy silane. The titanium compound is said to shorten the time for development of adhesion to substrate.

There is a continuing search for elastomer-forming silicone compositions using addition cure which have improved adhesion to various substrates.

We have now found that the addition of an organic titanate in combination with a radical-producing compound, e.g. a peroxide and (meth)acryloxy-functional silicone, to an addition curing silicone elastomer-forming composition improves the adhesion of the cured composition to a number of substrates.

According to the invention there is provided an elastomer-forming composition which comprises 100 parts by weight of (A) an organopolysiloxane having an average of two silicon-bonded vinyl groups per molecule, (B) an organosilicon compound having on average at least 3 silicon-bonded hydrogen atoms per molecule, (C) a noble metal catalyst, (D) a free radical producing compound, (E) an organosilane of the general formula Rₐ(RO)_{b}Six_{4-a-b} wherein R denotes an alkyl or aryl radical, X denotes a group of the formula -R'O(O)C-CR²=CH₂ wherein R' denotes a divalent hydrocarbon group having up to 6 carbon atoms, R² denotes a hydrogen atom or a methyl group, a has a value of 0 or 1, b has a value of 2 or 3 and a+b has a value of 2 or 3 and (F) an organotitanium compound having at least one hydrocarbon group attached to titanium via a TiOC linkage.

Component (A) of the composition of the invention is an organopolysiloxane which preferably has the general formula Vi-[SiR₂O]ₙ-SiR₂Vi wherein Vi denotes a vinyl group, R denotes an organic group, which is selected from monovalent hydrocarbon or halogen-substituted hydrocarbon groups having at most 8 carbon atoms per group, and wherein n is an integer. These preferred organopolysiloxanes are substantially linear polymers, but small amounts of trifunctional siloxane groups or tetrafunctional siloxane groups may also be present. Such groups would result in a certain amount of branching in the polymer. Although preferred organopolysiloxanes are end-blocked with vinyldiorganosiloxane units it is also possible that vinyl groups only occur along the chain of the polymer. Suitable polymers will have a viscosity at 20°C in the range of from 20mm²/s, to 20m²/s, preferably 100mm²/s to 50,000mm²/s. Suitable groups R include alkyl, alkenyl, aryl, chlorine or fluorine substituted alkyl groups, alkaryl and aralkyl groups. Examples of suitable groups R are methyl, ethyl, propyl, hexyl, phenyl, vinyl, butenyl, hexenyl, methylphenyl, trifluoropropyl and B(perfluoropropyl)ethyl. It is most preferred that at least 80% of all groups R are methyl groups. Most preferred organopolysiloxane (A) is therefore an α,ω-vinyl end-blocked polydimethylsiloxane. Suitable organopolysiloxanes (A) are well known and commercially available polymers.

Component (B) is preferably an organohydrogen siloxane having on average at least 3 silicon-bonded hydrogen atoms per molecule, any remaining substituents of the silicon atoms being monovalent hydrocarbon groups having up to 8 carbon atoms. These materials are also well-known in the art. The silicon-bonded hydrocarbon substituents are preferably selected from alkyl groups having from 1 to 6 carbon atoms and phenyl groups. The organohydrogen siloxanes can be homopolymers, copolymers or mixtures thereof which comprise units such as R₂SiO, R₃SiO_{1/2}, RHSiO, HSiO_{3/2}, RSiO_{3/2}, R₂HSiO_{1/2} and SiO₂, wherein R is as defined above. No more than 1 hydrogen atom should be linked to any one silicon atom. It is preferred that at least 80% of all R groups are lower alkyl groups, most preferably methyl groups. Specific examples of suitable organosilicon compounds (B) are copolymers of trimethylsiloxane, dimethylsiloxane and methylhydrogensiloxane units, cyclic methylhydrogensiloxanes and copolymers of dimethylhydrogensiloxane units, dimethylsiloxane units and methylhydrogensiloxane units. The organosilicon compounds (B) preferably have at least 5 silicon-bonded hydrogen atoms per molecule and are most preferably copolymers of trimethylsiloxane units, methylhydrogensiloxane units and optionally dimethylsiloxane units, and have a viscosity of from 15 to about 500mm²/s at 25°C.

The noble metal catalyst, which is used as Component (C) of the composition of the invention, is a group VIII metal or a complex or compound thereof. Preferably Component (C) is a platinum compound or complex. This component is effective in catalysing the addition reaction between the vinyl groups of Component (A) and the silicon-bonded hydrogen atoms of Component (B). This addition reaction is well known and has been described in a number of textbooks and publications. Suitable platinum compounds and complexes include chloroplatinic acid, platinum acetylacetonate, complexes of platinous halides with unsaturated compounds such as ethylene, propylene, organovinylsiloxanes and styrene, hexamethyldiplatinum, PtCl₂.PtCl₃ and Pt(CN)₃. The preferred platinum catalysts are complexes of platinum compounds and vinyl siloxanes, e.g. those formed by the reaction of chloroplatinic acid and divinyltetramethyl disiloxane. Sufficient of the catalyst should be employed to provide a homogenous and effective cure of the composition. The preferred proportion of platinum catalyst is usually that which will provide from about 1 to about 40 parts by weight of Pt per million parts by weight of Components (A) and (B) combined.

Component (D) is a free radical producing compound. Although any type of free radical producing compound is useful, such as those which are formed under the influence of UV radiation, it is preferred to limit the choice of compounds to those which produce free radicals under exposure to increased temperature. Particularly preferred are organic peroxides. Suitable organic peroxides are well-known in the art and are the same as those which constitute good free radical initiators for the curing of silicone elastomers. Examples of such suitable organic peroxides are alkyl peroxides, aryl peroxides, acyl peroxides, perketals and peresters. Particular examples include di-t-butylperoxide, dicumylperoxide, dichlorobenzoylperoxide, p-methylbenzoyl peroxide, 2,5-dimethyl-2,5-di(t-butyl-peroxy)hexane, t-butylperbenzoate and t-butyl-i-propyl-monoperoxy-carbonate. It is particularly preferred to use peroxides which decompose fairly easily at reasonably low temperatures, for example those which have a half life time at 100°C or less of one hour. However, the use of such peroxides tends to cause some instability in the compositions of the invention due their reactivity. It is therefore even more preferred to use stable peroxides, i.e. those with a higher decomposition temperature, in combination with a catalyst which will cause the decomposition of the peroxide at lower temperatures when mixed. Suitable catalysts for this decomposition include salts of heavy metals with organic acids, e.g. octoates and naphthanates of cobalt, lead, iron or manganese. In order to retain some stability of the composition prior to its application it is preferred to keep the peroxide and the catalyst separated, e.g. by making the composition into a two-part composition or by encapsulating or otherwise protecting the catalyst and/or the peroxide during storage.

The amount of Component (D) which may be used in the compositions of the invention is preferably from 0.1 to 5 parts by weight per 100 parts of the combined weight of Components (A) and (B), preferably 0.5 to 2 parts.

Component (E) is an organosilane of the general formula Rₐ(RO)_{b}SiX_{4-a-b} wherein R denotes an alkyl or aryl radical, X denotes a group of the formula -R'O(O)C-CR²=CH₂ wherein R' denotes a divalent hydrocarbon group having up to 6 carbon atoms, R² denotes a hydrogen atom or a methyl group, a has a value of 0 or 1, b has a value of 2 or 3 and a+b has a value of 2 or 3. These organosilanes are well known and commercially available materials. The amount of Component (E) which may be used in the compositions of the invention is preferably from 0.1 to 10 parts by weight for every 100 parts of the combined weight of Components (A) and (B), preferably 0.5 to 5 parts.

Component (F) an organotitanium compound having at least one hydrocarbon group, preferably an alkyl group linked to titanium via a TiOC linkage. These are well known compounds and are well documented in the art, e.g. in G.B. patents 962 061, 1 438 519 and 1 374 834. The other substituents on titanium may be other organic groups, e.g. ethylacetoacetate groups. Three main types of suitable organic titanium compounds are titanium chelates, titanium orthoesters, that is the alcoholates, and titanium acylates in which the organic group is derived from a carboxylic acid. The titanium compound may also contain several types of groups attached to the same titanium atom and also includes partial condensates containing TiOTi linkages and having on average less than four organic groups per titanium atom. The operative titanium compounds thus include those of the formula Ti(OZ)₄ wherein Z is e.g. alkyl, alkoxyalkyl or acyl, for example tetra-i-propyl titanate, tetrabutyl titanate, tetra(methoxyethoxy) titanate, di-i-propyldiacetoxy titanate. Other titanium compounds for use in the compositions of the invention are partially chelated titanium compounds. Such compounds can be obtained by reacting an alcoholate or phenolate of titanium, or a partial hydrolysate thereof with an α- or β-diketone or a derivative of such ketone. From about 1 to about 4 moles of the ketonic compound are employed per gramatom of titanium. The alcoholate may be derived from an aliphatic or cycloaliphatic alcohol or a phenol, e.g. ethanol, isopropanol, n-butanol, cyclohexanol. As the ketone reactant there may be employed a diketone, a ketonic acid, a keto-alcohol or an alkyl ester of a ketonic acid, e.g. diacyl, acetylacetonate, acetoacetic acid and ethylacetoacetate. Also suitable are titanium chelates derived from β-dicarbonyl compounds. Examples of such compounds are those represented by the general formula 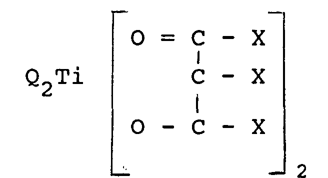 wherein the group X may be the same or different and each X denotes hydrogen or an aliphatic hydrocarbon group and Q is a group selected from monovalent aliphatic hydrocarbonoxy groups, e.g. ethoxy, propoxy and butoxy, acyloxy groups e.g. acetoxy, a hydroxyl group or the two Q groups taken together represent an alkanedioxy group 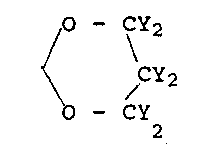 in which each Y represents hydrogen or a monovalent aliphatic hydrocarbon group. Specific examples of these titanium compounds are di-isopropoxytitanium bisacetylacetonate, di-isopropoxytitanium bisethylacetoacetate, ethoxy isopropoxytitanium bisacetylacetonate and di-n-butoxytitanium bisethylacetoacetate. Most preferred are the orthoesters, particularly tetra-isobutyl titanate. The amount of Component (F) which is to be used in the compositions of the invention is preferably in the range from 0.01 to 5 parts by weight based on 100 parts of Component (A), preferably 0.05 to 1 part.

Additional ingredients may also be used in compositions according to the invention. These include fillers, flame retardant additives, heat stabilising additives, additional adhesion promoting agents, pH stabilising agents, mildewicides, colorants, pigments and solvents. For example suitable fillers include reinforcing silica fillers such as pyrogenically produced silica and precipitated silica, resinous materials, for example those comprising units of the formula R₃SiO_{1/2} and units of the formula SiO₂ alumina, finely divided quartz, calcium carbonate, zinc oxide, titania and zirconium silicate. Fillers which are added to the compositions of this invention are preferably treated with filler treating agents to improve their compatibility with the other components of the composition. Such agents are generally known in the art and include for example hexamethyldisilazane, alkylalkoxysilanes, methylhalogenosilanes and short chain silanol end-blocked polydimethylsiloxanes. The filler may constitute up to about 50% by weight of the total composition but preferably constitutes from 5 to 40% by weight of the composition. The preferred filler is a reinforcing silica. Additional adhesion promoting agents include epoxy-functional silanes, e.g. those disclosed in U.S. specification 4,087,585. Small amounts of water may also be added and are found to improve the adhesion in some cases. In such cases the addition of water is of course preferred. Amounts of water are small and amount to no more than 20% of the amount of Component (D) used. An additional ingredient may be some palladium, which may be loaded on charcoal. This may be useful where small amounts of hydrogen are produced, or otherwise present in the composition, as palladium on charcoal has the ability to physically absorb hydrogen. This becomes important where the appearance of the final elastomeric material is important.

Compositions according to the present invention preferably have 100 parts by weight of Component (A), sufficient of Component (B) to give from 0.5 to 3 silicon-bonded hydrogen atoms per vinyl group present in Component (A), from 0.1 to 5 parts by weight of Component (D) as well as the appropriate amount of catalyst (C) as mentioned above.

Compositions according to the invention are curable at relatively low temperatures, and still provide good unprimed adhesion to a large number of substrates. Curing temperatures may vary from ambient temperature to higher temperatures, e.g. 50 to 150°C. Suitable substrates include aluminium, polyvinylchloride, polycarbonate, glass fibre reinforced (GFR) epoxy resin, copper, glass, polyetherimide, poly(phenyleneoxide) and poly (phenylene sulfone). Compositions according to the invention are useful as coatings and encapsulants, e.g. for electronic devices.

There now follow a number of examples and comparative examples which illustrate the benefits of the invention in which all parts and percentages are by weight, unless otherwise mentioned and viscosity is measured at 25°C.

### Preparation of Elastomer-Forming Bases

Base composition A was prepared by mixing 93.1 parts of a dimethylvinylsiloxane end-blocked polydimethylsiloxane having a viscosity of 450 mPa.s, 93.1 parts by weight of an inert ground quartz filler, 7.2 parts of a black paste containing 80.1% of a dimethylvinylsiloxane end-blocked polydimethylsiloxane having a viscosity of 450 mPa.s, 13.3% of zinc oxide and 6.6% of carbon black, 0.2 part of a solution of a platinum complex containing 0.6% platinum, 6.3 parts of a trimethylsiloxane end-blocked polydimethylsiloxane having 37.5 mole% dimethylsiloxane units and 62.5% methylhydrogensiloxane units and 0.1 part of polymethylvinylcyclosiloxane.

Base composition B was prepared consisting of 68.8 parts of a mixture of 80% by weight of a dimethylvinylsiloxy end-blocked polydimethylsiloxane with 20% by weight of a dimethylvinylated and trimethylated silica having a viscosity of 35Pa.s, 37.5 parts of ground quartz powder, 0.13 part of a platinum composition containing 6% platinum, 3 parts of a tri-methylsiloxy end-blocked organopolysiloxane having 37.5 mole% dimethylsiloxane units and 62.5 mole% methylhydrogensiloxane units and 0.09 part of cyclomethylvinylsiloxane.

### Example 1

100 parts of Base composition A were mixed with 0.3 part of dichlorobenzoyl peroxide, 0.5 part of methacryloxypropyl trimethoxysilane and 0.1 part of tetrabutyl titanate. The composition was then coated onto a number of substrates (aluminium, GFR epoxy, polyamide and polycarbonate) in a layer of 5mm thickness. One set of coated substrates was cured for 2 hours at 70°C and a second set was cured for 1 hour at 80°C. An attempt was then made to peel the cured silicone elastomer away from the substrates and the amount of cohesive failure noted (100% cohesive failure means 100% adhesion). In all cases 100% cohesive failure was observed. Substrates made of aluminium, copper, glass, GFR epoxy, polycarbonate, polyacrylate, PETP, polyvinylchloride, ABS, PSU and PMMA were coated with the composition and cured at 70°C for 5 hours, resulting in 100% cohesive failure in all cases, except for the PMMA where 50% cohesive failure was observed.

### Example 2

Example 1 was repeated, except that the 0.3 part of dichlorobenzoyl peroxide were replaced with 0.5 part of p-methyl benzoylperoxide. Coated substrates of aluminium, GFR epoxy resin, PVC, PMMA, ABS and PETP were cured for 1 hour at 100°C. After keeping the coated substrates for 24 hours at room temperature adhesion was tested. Cohesive failure was measured in all cases and found to be 100%, except for PMMA, where it was 90%.

### Example 3

Example 1 was repeated except that the 0.3 part of dichlorobenzoyl peroxide were replaced with 0.5 part of t-butyl-i-propyl monoperoxycarbonate (75% in petroleum ether) and 0.2 part of cobalt octoate. Curing of coated substrates at 80°C for 2 hours was followed by keeping the substrates for 24 hours at room temperature. Testing for adhesion showed excellent adhesion in all tested cases.

### Comparative Example 1

Example 3 was repeated without the use of cobalt octoate resulting in a lack of adhesion in all cases.

### Example 4

100 parts of Base composition B was mixed with 0.5 part of t-butyl-i-propyl monoperoxycarbonate (75% in petroleum ether), 0.2 part of cobalt octoate, 1 part of methacryloxypropyl trimethoxysilane and 0.1 part of tetrabutyl titanate. The composition was then coated onto a number of substrates (aluminium, GFR epoxy, polyamide, PVC, ABS, PPO, PMMA and polycarbonate) with a layer 5mm thick. Curing of coated substrates at 80°C for 2 hours was followed by keeping the coated substrate for 24 hours at room temperature. Adhesion testing showed excellent adhesion in all cases. Coated aluminium and PMMA substrates were also cured at 70°C and gave 100% cohesive failure on testing.

### Example 5

Example 4 was repeated adding 0.1 part of a 5% deposition of palladium on charcoal. During curing no foaming was observed. All coated and cured substrates gave 100% adhesion.

### Example 6

Example 4 was repeated, using 100 parts of Base composition A instead of Base composition B, and adding 0.1 part of a 5% deposition of palladium on charcoal. All coated and cured substrates gave 100% adhesion.

## Claims

1. An elastomer-forming composition which comprises 100 parts by weight of (A) an organopolysiloxane having an average of two silicon-bonded vinyl groups per molecule, (B) an organosilicon compound having on average at least 3 silicon-bonded hydrogen atoms per molecule, (C) a noble metal catalyst, (D) a free radical producing compound **characterised in that** the free radical producing compound is either (D)(i) an acyl peroxide or (D)(ii) an organic peroxide which has a half life time at 100oC of over one hour, provided that if the peroxide is of type (D)(ii) it is used in combination with a heavy metal salt of an organic acid which acts as a catalyst for the decomposition of the peroxide at a lower temperature, and **in that** the composition also comprises (E) an organosilane of the general formula Rₐ(RO)_{b}SiX_{4-a-b} wherein R denotes an alkyl or aryl radical, X denotes a group of the formula -R'O(O)C-CR²=CH₂ wherein R' denotes a divalent hydrocarbon group having up to 6 carbon atoms, R² denotes a hydrogen atom or a methyl group, a has a value of 0 or 1, b has a value of 2 or 3 and a+b has a value of 2 or 3 and (F) an organotitanium compound having at least one hydrocarbon group attached to titanium via a TiOC linkage.

2. An elastomer-forming composition according to Claim 1 further **characterised in that** organopolysiloxane (A) has the general formula Vi-[SiR₂O]ₙ-SiR₂Vi wherein Vi denotes a vinyl group, R denotes an organic group which is selected from monovalent hydrocarbon or halogen-substituted hydrocarbon groups having at most 8 carbon atoms per group and wherein n is an integer.

3. An elastomer-forming composition according to Claim 1 or Claim 2 further **characterised in that** organosilicon compound (B) is an organohydrogen siloxane having on average at least 5 silicon-bonded hydrogen atoms per molecule and being a copolymer of trimethylsiloxane units, methylhydrogensiloxane units and optionally dimethyl-siloxane units having a viscosity of from 15 to about 500mm²/s at 25°C.

4. An elastomer-forming composition according to any one of the preceding claims further **characterised in that** the noble metal catalyst (C) is a group VIII metal of a complex or compound thereof.

5. An elastomer-forming composition according to any one of preceding claims in which the component (D) is a peroxide of type (D)(ii) further **characterised in that** the heavy metal salt catalyst is selected from octoates and naphthanates of cobalt, lead, iron or manganese.

6. An elastomer-forming composition according to any one of the preceding claims further **characterised in that** Component (F) is selected from titanium chelates, titanium orthoesters and titanium acylates.

7. An elastomer-forming composition according to any one of the preceding claims further **characterised in that** it comprises as additional ingredient palladium loaded on charcoal.

8. An elastomer-forming composition according to any one of the preceding claims which comprises 100 parts by weight of Component (A), sufficient of Component (B) to give from 0.5 to 3 silicon-bonded hydrogen atoms per vinyl group present in Component (A) and sufficient of Component (C) to provide from 1 to 40 parts by weight of Pt per million parts by weight of Components (A) and (B) combined further **characterised in that** it also contains from 0.1 to 5 parts by weight of Component (D) per 100 parts of the combined weight of Components (A) and (B), from 0.1 to 10 parts by weight of Component (E) per 100 parts of the combined weight of Components (A) and (B) and from 0.01 to 5 parts by weight of Component (F).

## Patentansprüche

1. Elastomerbildende Zusammensetzung, die 100 Gewichtsteile (A) eines Organopolysiloxans mit durchschnittlich zwei siliciumgebundenen Vinylgruppen pro Molekül, (B) eine Organosiliciumverbindung mit durchschnittlich mindestens drei siliciumgebundenen Wasserstoffatomen pro Molekül, (C) einen Edelmetallkatalysator, (D) eine Radikal erzeugende Verbindung enthält, **dadurch gekennzeichnet, dass** die Radikal erzeugende Verbindung entweder (D)(i) ein Acylperoxid oder (D)(ii) ein organisches Peroxid ist, das eine Halbwertszeit bei 100°C von über einer Stunde aufweist, unter der Voraussetzung, dass, wenn das Peroxid vom Typ (D)(ii) ist, es in einer Kombination mit einem Schwermetallsalz einer organischen Säure, das als ein Katalysator für die Zersetzung des Peroxids bei niedriger Temperatur wirkt, verwendet wird, und dadurch, dass die Zusammensetzung auch (E) ein Organosilan der allgemeinen Formel Rₐ(RO)_{b}SiX_{4-a-b}, worin R einen Alkyl- oder Arylrest bedeutet, X eine Gruppe der Formel -R'O(O)C-CR²=CH₂ bedeutet, worin R' eine divalente Kohlenwasserstoffgruppe mit bis zu 6 Kohlenstoffatomen bedeutet, R² ein Wasserstoffatom oder eine Methylgruppe bedeutet, a einen Wert von 0 oder 1 aufweist, b einen Wert von 2 oder 3 aufweist und a+b einen Wert von 2 oder 3 aufweist, und (F) eine Organotitanverbindung mit mindestens einer Kohlenwasserstoffgruppe, die an Titan über eine TiOC-Verknüpfung gebunden ist, enthält.

2. Elastomerbildende Zusammensetzung nach Anspruch 1, weiterhin **dadurch gekennzeichnet, dass** Organopolysiloxan (A) die allgemeine Formel Vi-[SiR₂O]ₙ-SiR₂Vi aufweist, worin Vi eine Vinylgruppe bedeutet, R eine organische Gruppe bedeutet, die aus monovalenten Kohlenwasserstoff- oder halogensubstituierten Kohlenwasserstoffgruppen mit höchstens acht Kohlenstoffatomen pro Gruppe ausgewählt ist, und worin n eine ganze Zahl ist.

3. Elastomerbildende Zusammensetzung nach Anspruch 1 oder 2, weiterhin **dadurch gekennzeichnet, dass** Organosiliciumverbindung (B) ein Organowasserstoffsiloxan mit durchschnittlich mindestens 5 siliciumgebundenen Wasserstoffatomen pro Molekül ist und ein Copolymer aus Trimethylsiloxaneinheiten, Methylwasserstoffsiloxaneinheiten und optional Dimethylsiloxaneinheiten ist und eine Viskosität von 15 bis etwa 500 mm²/s bei 25°C aufweist.

4. Elastomerbildende Zusammensetzung nach einem der vorstehenden Ansprüche, weiterhin **dadurch gekennzeichnet, dass** der Edelmetallkatalysator (C) ein Gruppe-VIII-Metall oder ein Komplex oder eine Verbindung desselben ist.

5. Elastomerbildende Zusammensetzung nach einem der vorstehenden Ansprüche, in welchen die Komponente (D) ein Peroxid des Typs (D)(ii) ist, weiterhin **dadurch gekennzeichnet, dass** der Schwermetallsalzkatalysator ausgewählt ist aus Octoaten und Naphthanaten von Cobalt, Blei, Eisen oder Mangan.

6. Elastomerbildende Zusammensetzung nach einem der vorstehenden Ansprüche, weiterhin **dadurch gekennzeichnet, dass** Komponente (F) ausgewählt ist aus Titanchelaten, Titanorthoestern und Titanacylaten.

7. Elastomerbildende Zusammensetzung nach einem der vorstehenden Ansprüche, weiterhin **dadurch gekennzeichnet, dass** sie als einen zusätzlichen Bestandteil Palladium, das auf Kohle aufgebracht ist, enthält.

8. Elastomerbildende Zusammensetzung nach einem der vorstehenden Ansprüche, die 100 Gewichtsteile Komponente (A), ausreichend Komponente (B), um 0,5 bis 3 siliciumgebundene Wasserstoffatome pro Vinylgruppe, die in Komponente (A) vorhanden ist, zu ergeben, und ausreichend Komponente (C), um 1 bis 40 Gewichtsteile Pt pro Million Gewichtsteile Komponenten (A) und (B) in Kombination bereitzustellen, enthält, weiterhin **dadurch gekennzeichnet, dass** sie auch 0.1 bis 5 Gewichtsteile Komponente (D) pro 100 Teile des Gesamtgewichts von Komponenten (A) und (B), 0,1 bis 10 Gewichtsteile Komponente (E) pro 100 Teile des Gesamtgewichts von Komponenten (A) und (B) und 0,1 bis 5 Gewichtsteile Komponente (F) enthält.

## Revendications

1. Composition formant un élastomère laquelle comprend 100 parties en poids de (A) un organopolysiloxane ayant une moyenne de deux groupes vinyles liés à des siliciums par molécule, (B) un composé de type organosilicium ayant en moyenne au moins 3 atomes d'hydrogène liés à des siliciums par molécule, (C) un catalyseur en métal noble, (D) un composé produisant des radicaux libres **caractérisée en ce que** le composé produisant des radicaux libres est soit (D) (i) un peroxyde d'acyle soit (D) (ii) un peroxyde organique qui a une durée de demi-vie à 100°C supérieure à une heure, à condition que si le peroxyde est du type (D) (ii) il soit utilisé en association avec un sel de métal lourd d'un acide organique lequel sert de catalyseur pour la décomposition du peroxyde à une température plus basse, et **en ce que** la composition comprend également (E) un organosilane de formule générale Rₐ(RO)_{b}SiX_{4-a-b} dans laquelle R désigne un radical alkyle ou aryle, X désigne un groupe de formule -R'O(O)C-CR²=CH₂ dans laquelle R' désigne un groupe hydrocarbure divalent ayant jusqu'à 6 atomes de carbone, R² désigne un atome d'hydrogène ou un groupe méthyle, a a une valeur de 0 ou 1, b a une valeur de 2 ou 3 et a+b a une valeur de 2 ou 3 et (F) un composé de type organotitane ayant au moins un groupe hydrocarbure attaché au titane via une liaison TiOC.

2. Composition formant un élastomère selon la revendication 1 **caractérisée en plus en ce que** l'organopolysiloxane (A) a la formule générale Vi-[SiR₂O]ₙ-SiR₂Vi dans laquelle Vi désigne un groupe vinyle, R désigne un groupe organique lequel est choisi parmi des groupes monovalents hydrocarbures ou hydrocarbures substitués par un halogène ayant au plus 8 atomes de carbone par groupe et dans laquelle n est un nombre entier.

3. Composition formant un élastomère selon la revendication 1 ou la revendication 2 **caractérisée en plus en ce que** le composé de type organosilicium (B) est un organohydrogènesiloxane ayant en moyenne au moins 5 atomes d'hydrogène liés à des siliciums par molécule et étant un copolymère constitué d'unités triméthylsiloxanes, d'unités méthylhydrogènesiloxanes et de façon facultative d'unités diméthylsiloxanes ayant une viscosité comprise entre 15 et environ 500 mm²/s à 25°C.

4. Composition formant un élastomère selon l'une quelconque des revendications précédentes **caractérisée en plus en ce que** le catalyseur en métal noble (C) est un métal du groupe VIII ou un complexe ou un composé de celui-ci.

5. Composition formant un élastomère selon l'une quelconque des revendications précédentes dans laquelle le composant (D) est un peroxyde de type (D) (ii) **caractérisée en plus en ce que** le catalyseur en sel de métal lourd est choisi entre des octoates et des naphtanates de cobalt, de plomb, de fer ou de manganèse.

6. Composition formant un élastomère selon l'une quelconque des revendications précédentes **caractérisée en plus en ce que** le composant (F) est choisi parmi des chélates de titane, des orthoesters de titane et des acylates de titane.

7. Composition formant un élastomère selon l'une quelconque des revendications précédentes **caractérisée en plus en ce qu'**elle comprend comme ingrédient supplémentaire du palladium chargé sur du charbon.

8. Composition formant un élastomère selon l'une quelconque des revendications précédentes laquelle comprend 100 parties en poids de composant (A), suffisamment de composant (B) pour donner de 0,5 à 3 atomes d'hydrogène liés à des siliciums par groupe vinyle présent dans le composant (A) et suffisamment de composant (C) pour procurer de 1 à 40 parties en poids de Pt pour un million de parties en poids des composants (A) et (B) réunis **caractérisée en plus en ce qu'**elle contient également de 0,1 à 5 parties en poids de composant (D) pour 100 parties des poids réunis des composants (A) et (B), de 0,1 à 10 parties en poids de composant (E) pour 100 parties des poids réunis des composants (A) et (B) et de 0,01 à 5 parties en poids de composant (F).
